# EUROPEAN PATENT APPLICATION

(11) **EP 0 821 135 A1**
(43) Date of publication of application: **28.01.1998**
(21) Application number: 96202076.4
(22) Date of filing: 22.07.1996
(51) Int. Cl.: F01K 21/04

(54) **Energy generation by means of a combined gas and coalcycle**

(71) Applicant: N.V. Kema, 6812 AR Arnhem (NL)
(72) Inventor: Van Liere, Jacobus, 6865 ES Doorwerth (NL); Van der Burgt, Maarten Johannes, 1921 BP Akersloot (NL)
(74) Representative: Eveleens Maarse, Pieter

(57) **Abstract**

The invention relates to an installation for converting chemical energy stored in fuel into mechancial energy, comprising: a combustion chamber (4) for combusting fuel supplied thereto; a compressor (2) for compressing combustion air for supplying to the combustion chamber; and a turbine (1) for causing combustion gases coming from the combustion chamber to expand, wherein the compressor is driven by the turbine, wherein water supply means (18) are arranged for adding water or steam to the combustion air before it reaches the combustion chamber.

In preference a heat exchanger (5) is placed, the heated side of which is connected between the compressor and the combustion chamber and the heating side of which is placed between the outlet duct of the turbine and the outlet for the flue gases.

## Description

The present invention relates to an installation for converting chemical energy stored in fuel into mechanical energy, comprising: a combustion chamber for combusting fuel supplied thereto; a compressor for compressing combustion air for supplying to the combustion chamber; and a turbine for causing combustion gases coming from the combustion chamber to expand, wherein the compressor is driven by the turbine.

Such an installation is known from EP-A-0220510.

In this installation of the prior art the heat energy developed in the combustion chamber is transferred to the combustion gases which then convert their thermal energy into mechanical energy in the turbine.

In the prior art it is therefore only the combustion gases which act as energy carrier for transporting the thermal energy from the combustion chamber to the turbine.

Equipment of great size is thus necessary to realize a required power.

The object of the present invention is to provide such an installation which is less bulky and which can thus be operated at lower cost but wherein no concessions are made in efficiency.

This object is achieved in that water supply means are arranged for adding water or steam to the combustion air before it reaches the combustion chamber.

As a result of this step a portion of the energy is carried by water or steam, so that an installation of smaller dimensions can suffice.

It is pointed out here that the use of water or steam is known from the classic Carnot cycle. Here however a boiler is always used in which the thermal energy is transferred to the steam and in which the pressure is built up. Such steam boilers are expensive and bulky, both in the form of fire tube boilers and in the form of water tube boilers or other constructions.

It is further pointed out that the combination of a gas-turbine and steam is per se known from the so-called "stag" ("steam and gas") units which have been in use for some decades, wherein the thermal energy of the gases coming from the turbine is used to heat water and produce steam which then relinquishes its residual heat in a steam turbine.

According to a preferred embodiment the water supply means are adapted to supply water to the combustion air in the compressor.

Since the heating process takes place under pressure, the water will also have to be supplied to the combustion chamber under pressure; supplying the water to the combustion air during compression obviates a separate interstage cooler.

The water supply means are preferably adapted to supply water or steam to the compressor such that isothermal compression is enhanced.

The efficiency is improved still further when a heat exchanger is placed, the heated side of which is connected between the compressor and the combustion chamber and the heating side of which is placed between the outlet duct of the turbine and the outlet for the flue gases.

Other attractive preferred embodiments are specified in the remaining claims.

The present invention will now be elucidated with reference to the annexed drawing which shows a schematic representation of a cycle according to the present invention.

The installation according to the present invention shown schematically in the annexed drawing comprises a turbine 1 which is adapted to cause a mixture of combustion gases and steam to expand. A compressor 2 is arranged on the same shaft as turbine 1. The compressor 2 is adapted to compress the combustion gases for supplying to the combustion chamber.

A generator 3 is finally arranged on the same shaft. Although it will be apparent that it is simplest to place all three of these devices on the same shaft, it will be also apparent that it is possible to couple them directly to each other in a different manner.

The installation according to the invention further comprises a combustion chamber 4.

In addition, the installation comprises a heat exchanger 5, a particle removal device 6 and a chimney.

The outlet connection of the compressor is connected to the heated side 9 of heat exchanger 5 by means of a line 8, while the outlet of the heating side 9 of heat exchanger 5 is connected by means of a line 10 to combustion chamber 4. The outlet connection of combustion chamber 4 is connected to a particle removal device 6 by means of a line 11, while the inlet connection of the particle removal device 6 is connected to the outlet connection of turbine 1 by means of a line 12. The outlet connection of turbine 1 is connected by means of a line 13 to the heating side 14 of heat exchanger 5, while the outlet connection of the heating side 14 of heat exchanger 5 is connected to the chimney by means of a line 15.

Finally, a "bypass" line 16 is arranged which by-passes the heating chamber 4. A supply line 17 is arranged for supplying the compressed air to compressor 2, while a feed line 18 is arranged for supplying water to compressor 2.

The operation of the installation according to the present invention will now be elucidated.

The compressor 2 is adapted to compress air which is supplied via the line 17. The air has of course previously undergone a cleaning treatment. The relevant air is pressurized in compressor 2 to a pressure in the order of magnitude of 8 bar, which pressure can also lie between 5 bar and 15 bar, preferably between 6 bar and 12 bar, and which can lie more particularly between 7 bar and 10 bar. According to the preferred embodiment the pressure in question has a value of approximately 8 bar.

The compressor 2 is further adapted to inject water or steam into the various compressor stages or into the outlet of the compressor. This assumes water at a temperature of 20°C to 30°C. The gas mixture leaving the compressor herein has a temperature of approximately 90°C to 100°C. The relevant gas mixture is supplied via line 8 to the heating side 9 of heat exchanger 5, where it is heated to about 400°C to 550°C, this of course at the same pressure of approximately 8 bar. The relevant gas mixture is fed to the combustion chamber at this pressure, under which the entire combustion chamber functions. In the combustion chamber the oxygen present in the gas mixture is used for the combustion, while the other gases absorb the thermal energy created during combustion.

It is noted here that fuel, for instance in the form of coal, particularly powdered coal, is supplied to the combustion chamber 4 via a fuel supply line 19. This fuel supply line 19 is provided with means, for instance in the form of a coal pump, for increasing the pressure at which the fuel is supplied. In the case of powder-like, V-shaped or granular fuel it is possible to make use of a column for this purpose.

In the present embodiment the combustion gases, in combination with the steam of course, leave the combustion chamber at a temperature between 800°C and 1000°C, and in particular at roughly 900°C.

In a combustion chamber of the "PFBC" ("Pressurized Fluidized Bed Combustor") type the gases leave the combustion chamber at this temperature. The temperature of these gases is inherently associated with this type of combustion chamber.

It is however also possible to make use of a combustion chamber of the "Slagging Combustor" type wherein the combustion gases leave the combustion chamber at a much higher temperature, in the order of magnitude of around 1500°C. With such a "Slagging Combustor" a carrier is used on which the fuel is combusted such that slagging takes place. In order in this latter situation to supply the combustion gases to the turbine at a temperature of about 800°C to 900°C, use is made of the bypass line 16.

This bypass line can otherwise also be connected after the optional particle removal device 6; the gas flowing through the "bypass" line will generally no longer be contaminated with particles.

The relevant gases are then supplied to a particle removal device 6, for example a cyclone. The combustion gases are contaminated with particles particularly when solid fuels are used. These can be removed in the relevant particle removal device. It is otherwise possible to make use of different types of particle removal device, for instance electrostatic filters.

The cleaned gases are subsequently supplied to a turbine 1, where the gases are expanded to a pressure of 1 bar. In this way the turbine 1 is driven which also drives the generator 3 by means of its mechanical connection thereto, in addition to the compressor 2. The expanded gases are hereafter supplied to a heat exchanger where the combustion gases relinquish a large proportion of their heat to the compressed combustion air and the cooled combustion gases, which have cooled to a temperature of about 140°C, leave the process via a chimney 7.

It is also possible however to supply the gases which have passed through the heat exchanger 5 to an additional heat exchanger in which the water for supplying to the combustion air is pre-heated.

An installation is thus provided which in exceptionally simple manner implements a cycle which can be operated using simple means, such an installation thus requiring only a moderate investment, while a high efficiency is nevertheless obtained.

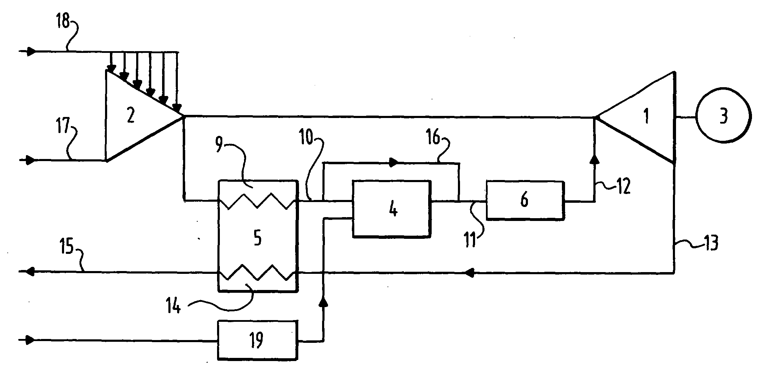

## Claims

1. Installation for converting chemical energy stored in fuel into mechanical energy, comprising:
- a combustion chamber for combusting fuel supplied thereto;
- a compressor for compressing combustion air for supplying to the combustion chamber; and
- a turbine for causing combustion gases coming from the combustion chamber to expand, wherein the compressor is driven by the turbine,
**characterized in that** water supply means are arranged for adding water or steam to the combustion air before it reaches the combustion chamber.

2. Installation as claimed in claim 1, **characterized in that** the water supply means are adapted to supply water or steam to the combustion air in the compressor.

3. Installation as claimed in claim 2, **characterized in that** the compressor is adapted for quasi-isothermal compression of combustion air.

4. Installation as claimed in any of the foregoing claims, **characterized in that** a heat exchanger is placed, the heated side of which is connected between the compressor and the combustion chamber and the heating side of which is placed between the outlet duct of the turbine and the outlet for the flue gases.

5. Installation as claimed in any of the foregoing claims, **characterized in that** the combustion chamber is adapted to combust fuels in a fluidized bed.

6. Installation as claimed in claim 5, **characterized in that** the combustion chamber is adapted to supply combustion gases at a temperature of between 600°C and 1200°C, more particularly between 700°C and 1000°C, and most particularly at approximately 900°C.

7. Installation as claimed in any of the claims 1-4, **characterized in that** the combustion chamber is adapted for combusting fuels on a slag-forming carrier.

8. Installation as claimed in claim 7, **characterized** in that the combustion chamber is adapted to supply combustion gases at a temperature of between 1200°C and 1700°C, and more particularly between 1400°C and 1600°C.

9. Installation as claimed in claim 7 or 8, **characterized in that** a "bypass" duct is arranged which bypasses the slag-forming carrier.

10. Installation as claimed in any of the foregoing claims, characterized in that the combustion chamber is adapted to burn solid fuels, for example coal or biomass.

11. Installation as claimed in any of the foregoing claims, characterized in that the combustion chamber is adapted to burn fuels producing ash in particle form, and that a particle removal device, for example a cyclone or a filter, is arranged in the duct carrying the combustion gases to the turbine.

12. Installation as claimed in any of the foregoing claims, **characterized in that** supply means for supplying fuel to the combustion chamber are adapted to supply fuel to the combustion chamber at the pressure prevailing in the combustion chamber.

13. Installation as claimed in any of the foregoing claims, **characterized in that** the compressor is adapted to supply pressurized air at a pressure between 5 and 15 bar, preferably between 6 and 12 bar, more particularly between 7 and 10 bar, and most particularly at approximately 8 bar.

14. Installation as claimed in any of the foregoing claims, **characterized in that** the turbine is coupled to a generator.

15. Installation as claimed in any of the claims 4-14, **characterized in that** the outlet connection from the heating side of the heat exchanger is connected to an additional heat exchanger for heating the water for injecting.
